# FASCICULE DE BREVET EUROPEEN

(11) **EP 3 924 788 B1**
(45) Date de publication et mention de la délivrance du brevet: **15.01.2025**
(21) Numéro de dépôt: 20704037.9
(22) Date de dépôt: 14.02.2020
(51) Int. Cl.: G05B 19/042

(54) **PROCÉDÉ DE COMMANDE, DISPOSITIF D'ENTRAÎNEMENT MOTORISÉ, INSTALLATION DOMOTIQUE COMPORTANT UN TEL DISPOSITIF D'ENTRAÎNEMENT MOTORISÉ**
STEUERUNGSVERFAHREN, MOTORISIERTE ANTRIEBSVORRICHTUNG, HAUSAUTOMATISIERUNGSANLAGE MIT EINER SOLCHEN MOTORISIERTEN ANTRIEBSVORRICHTUNG
CONTROL METHOD, MOTORISED DRIVE DEVICE, HOME AUTOMATION INSTALLATION COMPRISING SUCH A MOTORISED DRIVE DEVICE

(30) Priorité: 15.02.2019 FR 1901554
(43) Date de publication de la demande: 22.12.2021
(73) Titulaire: Somfy Activites SA, 74300 Cluses (FR)
(72) Inventeur: BENEY, Alain, 74800 ST LAURENT (FR)
(74) Mandataire: Lavoix
(86) Numéro de dépôt international: PCT/EP2020/053867
(87) Numéro de publication internationale: WO 2020/165399

(56) Documents cités:
- EP-A1- 2 028 574
- FR-A1- 2 478 843
- FR-A1- 2 915 817
- IT-A1- MI20 021 549
- US-A1- 2017 177 057

## Description

La présente invention se rapporte notamment à un procédé de commande, à un dispositif d'entraînement motorisé pour la mise en oeuvre de ce procédé de commande et à une installation domotique comportant un tel dispositif d'entraînement motorisé.

Dans le domaine de la domotique, par exemple pour des bâtiments à usage résidentiel, commercial ou industriel, il existe des installations domotiques qui comportent un écran déplaçable entre une position d'ouverture et une position de fermeture, ce déplacement étant assuré par un dispositif d'entraînement motorisé pilotable par un utilisateur et incluant un actionneur électromécanique, comprenant notamment un moteur électrique, généralement logé dans un tube d'enroulement sur lequel s'enroule l'écran, ou dans un rail de support de l'écran.

Un exemple d'un actionneur électromécanique est décrit par la demande de brevet EP 2028574 A1 et par le document IT MI20 021 549 A1.

Dans le cas d'installations domotiques d'occultation et/ou de fermeture, l'écran sert à fermer et/ou protéger une ouverture d'un bâtiment, telle qu'une entrée, ou un portail, ou une fenêtre, ou une entrée de garage, en vue d'en restreindre l'accès. L'écran comporte alors une porte, ou un portail, ou un store, ou un rideau, ou un volet, notamment un volet roulant ou un volet battant. Selon d'autres exemples, l'écran peut également servir à protéger un bâtiment contre le rayonnement solaire ou contre des intempéries.

Typiquement, le dispositif d'entraînement est destiné à être alimenté électriquement par un réseau de distribution électrique domestique. Il peut arriver que l'alimentation électrique fournie par le réseau de distribution soit temporairement interrompue, forçant l'arrêt de l'installation domotique.

Lorsque l'alimentation électrique est rétablie, la position courante de l'écran doit être connue par le dispositif d'entraînement, afin d'éviter que, lors de déplacements subséquents, la position de l'écran ne corresponde pas à une position cible demandée par un utilisateur, ou que l'écran soit déplacé au-delà de sa position limite, par exemple, d'ouverture ou de fermeture, ce qui pourrait endommager l'installation domotique.

Il est connu des dispositifs d'entraînement mémorisant la position courante de l'écran avant de s'éteindre lorsque l'alimentation est interrompue. Toutefois, dans certains cas, l'écran peut être déplacé pendant la coupure de l'alimentation, de sorte qu'une fois que l'alimentation électrique est rétablie, la position mémorisée ne correspond plus à la position courante de l'écran.

Par exemple, il peut arriver qu'un utilisateur déplace manuellement l'écran pendant l'interruption de l'alimentation au moyen d'un organe d'actionnement auxiliaire, tel qu'une manivelle. Dans le cas d'un dispositif de protection d'une terrasse, lors d'une coupure de l'alimentation, la position du store peut être modifiée, par exemple, par l'action du vent sur le store ou d'un autre élément extérieur au dispositif.

En pratique, le dispositif d'actionnement peut être programmé pour recaler automatiquement la position de l'écran dès que l'alimentation est rétablie, par exemple en déplaçant l'écran vers une position de référence prédéfinie ou suivant une séquence de déplacements prédéterminés, de sorte à ramener l'écran vers une position connue et ainsi éliminer toute discordance entre la position connue et la position réelle de l'écran.

Toutefois, des mouvements de recalage répétés trop fréquemment conduisent à une usure prématurée de certains organes mécaniques de l'installation domotique et/ou du dispositif d'actionnement. A titre d'exemple, les bras articulés d'un store de terrasse ne supportent qu'un nombre limité de recalages. De ce fait, le store ne peut pas effectuer un recalage après chaque coupure de l'alimentation au risque de réduire sa durée de vie.

Par ailleurs, les actionneurs électromécaniques des installations domotiques doivent répondre à des normes imposant une consommation en veille inférieure à 0,5W. En veille, l'actionneur, en particulier un circuit électronique de l'actionneur, est en attente d'un éventuel ordre de déplacement, sans être sollicité pour un tel déplacement. Pour répondre à cette norme, il est connu de limiter la tension d'alimentation de l'actionneur à une tension de veille suffisante pour assurer l'alimentation du circuit électronique, mais inférieure à une tension d'alimentation du moteur électrique. Toutefois, lorsque l'actionneur comprend un condensateur d'alimentation du circuit électronique pour les périodes de coupure d'alimentation secteur, cette limite de tension limite également la tension de charge du condensateur. Cette limitation de tension imposerait donc une augmentation proportionnelle de la capacité du condensateur, ainsi que de fait une augmentation de son encombrement, ce qui est incompatible avec les contraintes d'encombrement à respecter pour un actionneur d'installation domotique dans un tube d'enroulement ou un rail.

C'est à ces inconvénients qu'entendent plus particulièrement remédier des modes de réalisation de l'invention, en proposant un procédé de commande d'un dispositif d'entraînement motorisé pour une installation domotique.

A cet effet, un aspect de l'invention est un procédé de commande selon la revendication 1.

Grâce à l'invention, en détectant si la position de l'écran a été modifiée au cours de la coupure de l'alimentation et notamment de la durée prédéfinie, le dispositif d'entraînement détermine s'il est nécessaire ou non de recaler la position de l'écran lorsque l'alimentation électrique est rétablie. Cela permet ainsi de ne pas avoir à effectuer systématiquement un recalage de la position de l'écran après chaque interruption de l'alimentation électrique, évitant ainsi une usure prématurée de l'installation domotique. Un tel procédé peut, de surcroît, être implémenté dans des dispositifs d'entraînement existants.

Selon des aspects avantageux mais non obligatoires, un tel procédé de commande peut incorporer une ou plusieurs des caractéristiques des revendications 2 à 8

Un autre aspect de l'invention est un dispositif d'actionnement motorisé selon la revendication 9.

Un autre aspect de l'invention est une installation domotique selon la revendication 10.

L'invention sera mieux comprise et d'autres avantages de celle-ci apparaîtront plus clairement à la lumière de la description qui va suivre d'un mode de réalisation d'un procédé de commande, donnée uniquement à titre d'exemple et faite en référence aux dessins annexés, dans lesquels :
[Fig 1] la figure 1 est un schéma synoptique d'un dispositif d'actionnement motorisé pour une installation domotique selon un des modes de mise en oeuvre de l'invention ;
[Fig 2] la figure 2 est un schéma électrique d'un exemple d'un circuit de puissance du dispositif d'actionnement motorisé de la figure 1 ;
[Fig 3] la figure 3 est un diagramme de flux d'un exemple de procédé de fonctionnement du dispositif d'actionnement motorisé de la figure 1.

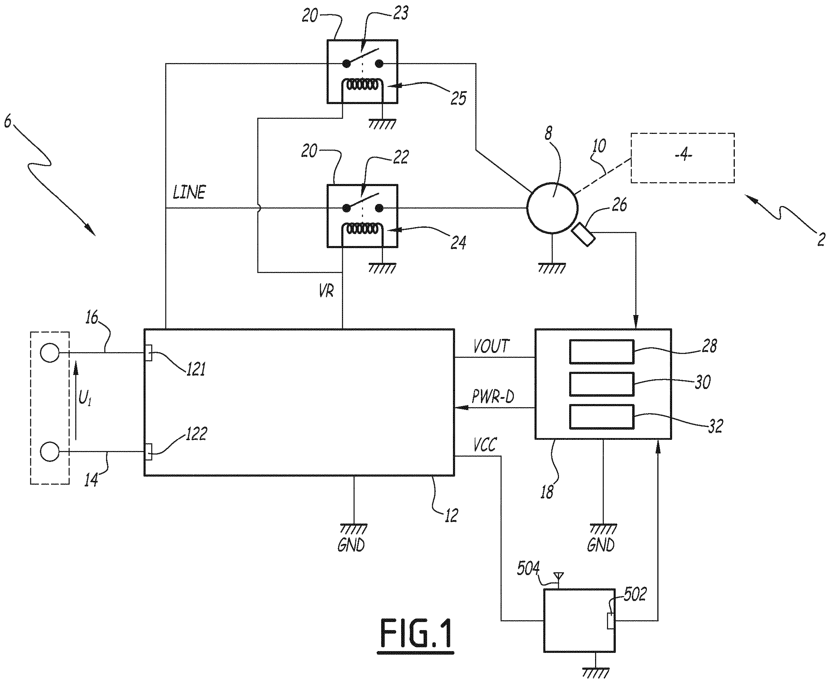

Sur la figure 1 est représenté un dispositif domotique 2, aussi nommé installation domotique, pouvant être un dispositif d'occultation, de fermeture ou de protection solaire. Le dispositif domotique comprend un dispositif d'entraînement 6 motorisé agencé pour mettre en mouvement un élément mobile ou écran 4. Le dispositif d'entraînement 6 motorisé comprend un actionneur électromécanique d'un élément mobile de fermeture, d'occultation ou de protection solaire tel qu'un volet roulant, un volet battant, une porte, une grille, un store ou tout autre matériel équivalent, appelé par la suite écran. Le dispositif domotique 2 peut toutefois également être une porte de garage ou un portail motorisé. L'actionneur électromécanique comprend un moteur électrique 8, un arbre de sortie et un dispositif de réduction (non représenté) de manière connue. En particulier, l'actionneur électromécanique est un actionneur tubulaire, destiné à être inséré dans un tube d'enroulement sur lequel s'enroule l'écran 4.

L'actionneur électromécanique peut également comprendre un dispositif (non représenté) de détection de fin de course et/ou d'obstacle pouvant être mécanique ou électronique.

L'écran 4 est déplaçable réversiblement entre au moins une première position finale et au moins une deuxième position finale. La première position finale peut, par exemple, correspondre à une position d'ouverture ou une position dans laquelle l'écran est totalement enroulé. De façon analogue, la deuxième position finale peut, par exemple, correspondre à une position de fermeture ou une position dans laquelle l'écran est totalement déroulé. En pratique, l'écran 4 peut aussi être déplacé et maintenu dans des positions intermédiaires situées entre la première position finale et la deuxième position finale.

Selon des exemples, l'écran 4 vise à protéger une ouverture d'un bâtiment ou d'une propriété, telle qu'une entrée d'un bâtiment, ou d'une propriété, ou une fenêtre, ou une entrée de garage, en vue d'en restreindre l'accès. L'écran 4 peut être alors une porte, ou un portail, ou une fenêtre motorisée, par exemple coulissante ou oscillo-battante, ou un store, ou un rideau, ou un volet, notamment un volet roulant ou un volet battant.

Selon d'autres exemples, l'écran 4 peut également servir à protéger tout ou partie d'un bâtiment contre le rayonnement solaire ou contre des intempéries. L'écran est, par exemple, destiné à protéger une ouverture, un balcon ou une terrasse.

Le dispositif domotique 2 d'occultation, de fermeture ou de protection solaire peut donc être associé à un bâtiment, par exemple en étant monté sur une partie intérieure ou extérieure du bâtiment.

Le dispositif d'entraînement 6 motorisé comporte un actionneur couplé mécaniquement à l'écran 4 et agencé pour déplacer l'écran 4 entre ses différentes positions.

A cet effet, dans certains modes de réalisation, le dispositif d'entraînement 6 comprend un organe de couplage 10 connecté mécaniquement entre l'arbre de sortie (non représenté) du moteur électrique 8 et l'écran 4, de manière à transmettre à l'écran 4 un mouvement généré par le moteur 8 électrique.

En d'autres termes, un mouvement du moteur 8 entraîne un déplacement correspondant de l'écran 4 dans un sens ou dans l'autre, vers la première position ou la deuxième position.

Le moteur 8 fournit ainsi un mouvement de rotation qui est transmis et/ou converti par l'organe de couplage 10 ou un autre organe dédié en un mouvement approprié pour déplacer l'écran 4, ce mouvement étant choisi en fonction de la nature et de la façon dont l'écran 4 est agencé et/ou installé.

Selon des exemples, le moteur 8 est un moteur électrique dont un arbre de sortie lié à un rotor du moteur est connecté mécaniquement à l'écran 4, ici par l'intermédiaire de l'organe de couplage 10.

Selon un mode de réalisation, le moteur électrique est un moteur à courant continu. Suivant une variante, le moteur électrique est un moteur à courant alternatif.

En variante, l'actionneur peut inclure un vérin électrique, ou tout autre dispositif d'actionnement mécanique alimenté électriquement.

Selon des exemples non exhaustifs, l'organe 10 peut inclure un réducteur, ou un levier, ou un arbre rotatif, ou une crémaillère, ou un cardan, ou tout dispositif de transmission approprié en fonction de la nature de l'écran 4 et du moteur 8.

Le dispositif domotique 2 comporte également un circuit d'alimentation électrique 12 agencé pour fournir différentes valeurs de tension sur différentes sorties du circuit d'alimentation et des bornes d'alimentation électrique 14 et 16, connectées à une entrée du circuit d'alimentation électrique 12.

Le dispositif domotique 2 et notamment le circuit d'alimentation électrique 12 est destiné à être connecté électriquement à une source d'alimentation 13 extérieure au dispositif, telle qu'un réseau de distribution électrique domestique afin d'être alimenté par la source d'alimentation extérieure. Par exemple, chacune des bornes 121, 122 du circuit d'alimentation électrique 12 est destinée à être raccordée électriquement à la source d'alimentation 13 extérieure par l'intermédiaire de conducteurs électriques 14, 16 notamment d'un conducteur de neutre et d'un conducteur de phase. Une tension électrique d'alimentation U₁, notamment une tension électrique alternative peut être appliquée entre les bornes 121, 122 du circuit d'alimentation électrique 12.

Le dispositif domotique 2 comporte également un circuit électronique de commande et/ou de contrôle 18 et un organe de commutation 20 électriquement pilotable.

Suivant un mode de réalisation, le circuit d'alimentation électrique 12 et/ou le circuit électronique de commande et/ou de contrôle 18 est inclus dans un boîtier de l'actionneur. Suivant une variante de réalisation, le circuit d'alimentation électrique 12 et/ou le circuit électronique de commande et/ou de contrôle 18 est déporté de l'actionneur, par exemple, dans le dispositif d'entrainement motorisé.

Par exemple, l'organe de commutation 20 comprend un relais électromécanique comportant un ou plusieurs contacts mobiles 22, 23 et une ou des bobines 24, 25 associées, agencées pour commuter le ou l'un des contacts mobiles 22, 23 dans une première position ou une deuxième position suivant si la bobine associée est excitée ou non. En variante, l'organe de commutation 20 est un transistor de puissance ou un triac pilotable au moyen d'une électrode de commande, par exemple, lorsque le moteur est de type alternatif à induction. Suivant un autre mode de réalisation, l'organe de commutation peut comprendre un onduleur si le moteur est de type sans balais (ou brushless en anglais) à aimants permanents.

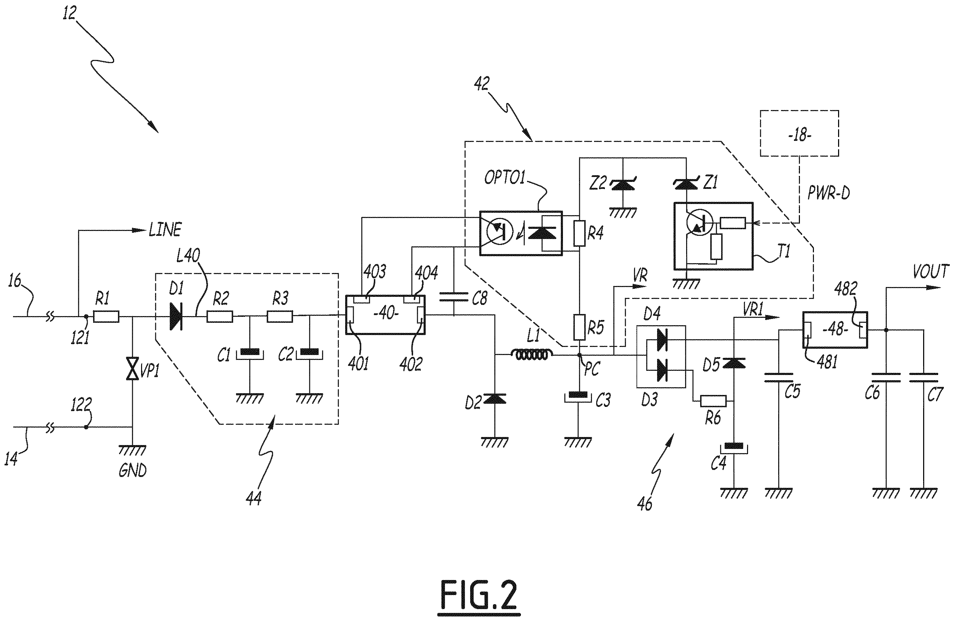

La référence LINE désigne une ligne d'alimentation électrique. Selon un mode de réalisation, une première extrémité de la première ligne d'alimentation est connectée électriquement à une sortie du circuit d'alimentation électrique 12 destinée à fournir une tension d'alimentation au moteur 8. La tension d'alimentation peut être une tension continue ou alternative. Suivant une variante de réalisation, la première extrémité de la première ligne d'alimentation LINE est connectée à un conducteur électrique de la source d'alimentation extérieure, par exemple, un conducteur de phase d'un réseau alternatif comme illustré sur la figure 2.

Une deuxième extrémité de la ligne d'alimentation LINE est connectée électriquement à au moins une borne de l'organe de commutation 20. La commutation de l'organe de commutation 20 entre un état ouvert et un état fermé permet sélectivement d'alimenter ou non le moteur 8.

La référence VR désigne une ligne de commande agencée pour piloter la commutation de l'organe de commutation 20. Dans l'exemple illustré sur la figure 1, la ligne VR est connectée électriquement à la bobine 24 pour fournir une tension de commande à la bobine 24.

La référence VOUT désigne une deuxième ligne d'alimentation destinée à fournir une tension électrique continue stabilisée à des éléments du dispositif domotique 2, notamment au circuit électronique de commande et/ou de contrôle 18.

La référence VR1 désigne une troisième ligne d'alimentation destinée à fournir une tension électrique continue stabilisée à des éléments du dispositif domotique 2, notamment au capteur 26.

La référence « GND » désigne une masse électrique du dispositif domotique 2. Par exemple, la borne 121 est connectée électriquement à la masse GND.

Par exemple, le circuit d'alimentation électrique 12 est configuré pour convertir et/ou distribuer la tension d'alimentation U₁ reçue en une ou plusieurs tensions électriques de valeurs différentes délivrées sur des sorties correspondantes du circuit d'alimentation 12. Les lignes LINE, VR, VR1 et VOUT sont ici connectées électriquement à différentes sorties du circuit d'alimentation 12.

Le dispositif domotique 2 comporte également au moins un capteur 26. Il peut s'agir d'un ou plusieurs capteurs de position et/ou de déplacement configurés pour délivrer un signal électrique proportionnel à une position et/ou un déplacement. Il peut s'agir de la position ou du déplacement de l'écran 4, de l'arbre de sortie du moteur 8, de l'organe de couplage 10 ou de tout autre organe entraîné directement ou indirectement par l'arbre de sortie du rotor du moteur. Par la suite le terme capteur sera utilisé au singulier qu'il y ait un ou plusieurs capteurs de position et/ou de déplacement.

Le capteur 26 est ici illustré associé au moteur 8, bien qu'en variante le capteur 26 peut être associé à l'organe de couplage 10 ou à l'écran 4.

En d'autres termes, la position et/ou le déplacement de l'écran 4 peut être mesurée indirectement, notamment en mesurant la position d'un élément mécanique faisant partie de la chaîne de transmission du mouvement fourni par le moteur 8.

Selon des exemples non exhaustifs, le capteur 26 est un codeur rotatif, ou un capteur à effet Hall, ou un capteur magnéto-résistif, ou un interrupteur à contact, ou un dispositif de télémétrie.

Par exemple, lorsque le moteur 8 est un moteur électrique, le capteur 26 délivre un signal électrique proportionnel à la position angulaire et/ou un déplacement angulaire de l'arbre de sortie du moteur ou du rotor du moteur.

Une sortie du capteur 26 est raccordé électriquement à une entrée du circuit électronique de commande et/ou de contrôle 18 pour transmettre des signaux représentatifs de la position et/ou du déplacement mesuré.

Le circuit électronique de commande et/ou de contrôle 18 comporte ici une unité logique de traitement 28, une mémoire informatique 30 et une horloge 32.

L'unité logique de traitement 28 (« CPU » pour *Central Processing Unit* en anglais) comporte ici un ou plusieurs microcontrôleurs programmables, microprocesseur ou tous autres moyens équivalents programmés de façon opportune pour exécuter un programme informatique ou code logiciel et mettre en oeuvre tout ou partie d'au moins une étape d'un procédé selon l'invention.

La mémoire 30 forme un support de stockage d'information non transitoire et lisible par machine comme une unité logique de traitement, un processeur ou un microprocesseur.

Selon des exemples, la mémoire est une mémoire morte (ou « ROM » pour *Read Only Memory* en anglais), ou une mémoire vive (ou « RAM » pour *Random Accès Memory* en anglais), ou une mémoire non volatile de type EPROM (pour *Erasable Programmable Read-Only Memory* en anglais), ou EEPROM (pour *Electrically-Erasable Programmable Read-Only Memory* en anglais), ou Flash, ou NVRAM (pour *Non-volatile random-access memory* en anglais), ou une mémoire optique, ou une mémoire magnétique, ou toute autre technologie d'enregistrement appropriée.

L'horloge 32 comporte ici un oscillateur à cristal, tel qu'un oscillateur à quartz.

Selon des variantes, l'horloge 32 peut être intégrée à l'unité logique 28 et/ou implémentée par l'unité logique 28.

La mémoire 30 est destinée à stocker notamment des instructions exécutables et/ou un code logiciel lisible par machine ou microprocesseur pour mettre en oeuvre automatiquement un procédé de pilotage du dispositif domotique 2 lorsque ces instructions et/ou ce code sont exécutés par l'unité logique 28.

La mémoire 30 est également agencée pour stocker des signaux représentatifs de valeurs particulières comme des valeurs de position courante, des valeurs de fin de course, des valeurs de seuils de détection d'obstacle ou des signaux représentatifs d'unités de commande appairées avec l'actionneur électromécanique.

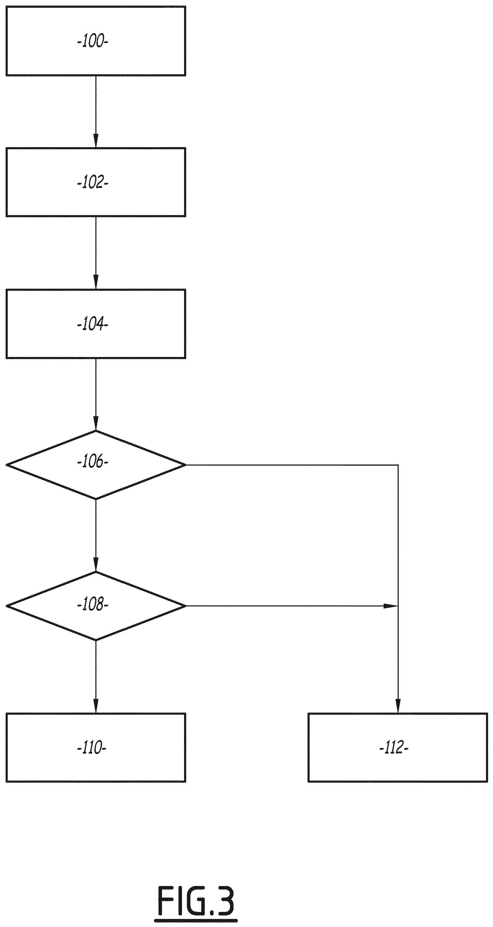

Le circuit électronique de commande et/ou de contrôle 18 est programmé notamment pour la mise en oeuvre de procédés et notamment du procédé de commande décrit ci-après en référence à la figure 3.

Selon des modes de réalisation alternatifs, le circuit électronique 18 comporte un composant logique programmable de type FPGA (pour « *Field Programmable Gate Array »* en anglais), ou encore un circuit intégré dédié de type ASIC (pour *« Application Specific Integrated Circuit »* en anglais) configuré pour mettre en oeuvre de tels procédés.

Le circuit électronique 18 est de préférence connecté électriquement au circuit d'alimentation 12 pour piloter le fonctionnement du circuit d'alimentation 12.

Par exemple, pour commander un déplacement de l'écran 4, le circuit électronique 18 peut agir sur l'organe de commutation 20 par l'intermédiaire du circuit d'alimentation électrique 12. Le circuit électronique 18 peut délivrer, sur la ligne PWR-D, un signal électrique de commande et en retour, le circuit d'alimentation transmet, sur la ligne de commande VR, un signal électrique à destination de l'organe de commutation 20 afin de le commuter pendant un temps prédéterminé et ainsi alimenter le moteur 8.

Selon des modes de réalisation non illustrés, le circuit électronique 18 peut comporter une interface d'échange de données, par exemple, pour communiquer avec un récepteur d'ordres 50 et/ou avec un transmetteur radio.

Selon un mode de réalisation le dispositif domotique comprend un récepteur d'ordres 50 dont une sortie de signal 502 est connectée électriquement à l'unité de commande et/ou de contrôle 18. Le récepteur d'ordres 50 est connecté électriquement à une masse électrique GND. Selon un mode de réalisation le récepteur d'ordres 50 est un récepteur de type filaire recevant des signaux représentatifs de commande à exécuter, par exemple, par une liaison filaire, un bus de données, par courant porteur, etc. Selon une variante de réalisation le récepteur d'ordres 50 est un récepteur de type optique, comme un récepteur infrarouge. De façon préférentiel, le récepteur d'ordres 50 est un récepteur radiofréquence. Dans ce mode de réalisation le récepteur d'ordres 50 est connecté électriquement à au moins une antenne 504.

Le récepteur d'ordre est configuré pour recevoir des signaux représentatifs d'ordres émis par au moins une unité de commande, notamment une unité de commande appariée avec l'actionneur. Selon un mode de réalisation, le récepteur d'ordre est également configuré pour transmettre des signaux. L'unité de commande peut être, par exemple, un interrupteur, un clavier, une télécommande ou une unité de commande centrale également nommée box domotique.

Un exemple de mode de réalisation du circuit d'alimentation 12 est décrit en référence à la figure 2.

Le circuit d'alimentation 12 comporte notamment une première 121 et une deuxième 122 borne d'alimentation, un régulateur de tension 40 tel qu'un régulateur à découpage, une boucle de régulation et de commande 42 du régulateur 40, un étage primaire 44 connecté en entrée 401 du régulateur 40 et un étage secondaire 46 connecté en sortie 402 du régulateur 40. L'étage secondaire 46 comporte notamment un régulateur de tension 48 agencé pour délivrer, notamment sur la ligne d'alimentation VOUT, une tension d'amplitude prédéterminée.

Par exemple, l'étage primaire 44 désigne la partie du circuit d'alimentation 12 connectée en amont de l'entrée 401 du régulateur 40 c'est à dire, entre les première 121 et deuxième 122 bornes d'alimentation du circuit d'alimentation 12 et l'entrée 401 du régulateur 40. L'étage secondaire 46 désigne la partie du circuit d'alimentation 12 connectée en aval de la sortie 402 du régulateur 40.

Par convention, afin de définir l'amont et l'aval d'un circuit ou d'un composant électronique, on choisit le sens de circulation du courant d'une borne 121, 122 du circuit d'alimentation 12 vers l'entrée 401 du régulateur 40.

Dans l'exemple illustré, la deuxième borne d'alimentation 122 est connectée électriquement à la masse GND du dispositif domotique. De façon préférentielle, la deuxième borne d'alimentation 122 du circuit d'alimentation 12 est connectée électriquement à un conducteur de neutre de la source d'alimentation extérieure.

Un circuit de protection, un circuit de redressement et un circuit de filtrage sont connectés électriquement en série entre les première et deuxième bornes 121, 122 du circuit d'alimentation 12 d'une part et l'entrée 401 du régulateur à découpage 40 d'autre part par une branche d'entrée L40.

Le circuit de protection comprend un dispositif de protection contre les surtensions P comme un éclateur ou une varistance connectée entre les première et deuxième bornes 121, 122 du circuit d'alimentation 12. Le circuit de protection peut comprendre une résistance R1 afin de limiter le courant connectée électriquement en série entre une borne d'alimentation 121, 122 et le dispositif de protection contre les surtensions P.

Suivant un mode de réalisation le circuit de redressement est un circuit de redressement mono alternance et comprend une diode D1. Suivant une variante de réalisation, le circuit de redressement est du type double alternance comprenant une pluralité de diodes.

Le circuit de filtrage comprend un ou plusieurs condensateurs de filtrage C1, C2 connectés électriquement entre la branche d'entrée L40 du régulateur à découpage 40 et la masse GND. Suivant un mode de réalisation, le circuit de filtrage comprend une résistance R2, R3 connectée électriquement en série en amont de chaque condensateur de filtrage C1, C2. De façon avantageuse, la résistance R2, R3, connectée en amont du condensateur de filtrage C1, C2, permet de limiter le courant, notamment lors de la mise sous tension et ainsi protéger le condensateur en évitant les pics de courant.

Le circuit de filtrage permet de lisser la tension en sortie du circuit de redressement. Le circuit de filtrage permet également de filtrer les parasites générés par le régulateur à découpage 40 afin d'éviter qu'ils polluent le réseau de distribution électrique domestique.

Les condensateurs de filtrage d'entrée C1 et C2 forment une première réserve d'énergie en entrée du régulateur 40. Par la suite le ou les condensateurs d'entrée seront appelés condensateur d'entrée et le singulier sera employé quel que soit le nombre de condensateurs utilisés.

Selon des exemples illustratifs, la valeur de la capacité du condensateur d'entrée C1, C2 est inférieure ou égale à 15µF, par exemple de l'ordre de 2,2µF, ou 3,3µF, ou 6,8µF.

En variante, le nombre de condensateurs ainsi connectés en entrée du régulateur 40 peut être différent, par exemple égal à un ou supérieur à deux. En cas de pluralité de condensateurs d'entrée, les condensateurs sont par exemple identiques. Suivant une variante de réalisation les condensateurs ont des valeurs de capacité différentes.

Le régulateur 40 est ici un régulateur de type continu-continu abaisseur de tension. En pratique, la tension d'alimentation U₁ fournie aux bornes 121 et 122 du circuit d'alimentation 12 est redressée par la diode D1 et filtrée par les condensateurs C1, C2 d'entrée, de sorte que le régulateur 40 reçoit en entrée une tension continue.

Par exemple, le régulateur 40 est une alimentation à découpage tel qu'un hacheur. Selon un exemple illustratif et non nécessairement limitatif, le régulateur 40 est un hacheur vendu par la société Power Intégrations sous la référence LNK304.

La boucle de régulation 42 est configurée pour délivrer une tension de commande sur des entrées de commande 403, 404 du régulateur 40, par exemple en vue de fixer le rapport cyclique de découpage et ainsi régler la valeur de la tension délivrée en sortie 402 du régulateur 40 et donc la valeur du signal électrique sur la ligne de commande VR. La boucle de régulation 42 comporte ici un interrupteur commandé T1, un optocoupleur OPTO, une première et une deuxième diodes Zener Z1, Z2. Les bornes d'entrée de commande 403, 404 du convertisseur 40 sont connectées à deux électrodes d'un transistor de l'optocoupleur OPTO, l'une des électrodes (par exemple l'émetteur) étant connectée à la sortie du régulateur 40 par l'intermédiaire d'un condensateur C8.

L'optocoupleur OPTO permet d'ajuster le fonctionnement du régulateur 40 afin de faire varier la valeur de la tension de sortie du régulateur 40. Dans l'exemple illustré sur la figure 2, la valeur de la tension de sortie peut prendre alternativement deux valeurs suivant si l'interrupteur commandé T1 est ouvert ou fermé. Suivant un mode de mise en oeuvre, la valeur de la tension de sortie est liée au mode de fonctionnement du dispositif domotique et notamment de l'actionneur 8. Par exemple, lorsque l'interrupteur T1 est ouvert la valeur de la tension de sortie du régulateur 40 est égale à une deuxième valeur dite de réveil. Lorsque l'interrupteur T1 est fermé, la valeur de la tension de sortie du régulateur est égale à une première valeur dite de veille. La valeur de la tension de veille est inférieure à celle de réveil.

L'interrupteur commandé T1, la première diode Zener Z1 et des résistances R4 et R5 sont connectés en série entre la masse GND et un point commun PC relié à la sortie du régulateur 40 par une inductance L1. L'interrupteur commandé peut être un transistor, un triac, un relais ou tout autre dispositif commandé d'interruption ou de commutation équivalent. L'interrupteur commandé T1 comprend au moins une électrode de commande agencée pour commuter l'interrupteur lorsqu'un signal électrique prédéterminé y est appliqué.

La deuxième diode Zener Z2 est connectée électriquement en parallèle avec la première diode Zener Z1 et l'interrupteur commandé T1. La cathode de la première diode Zener Z1 est connectée électriquement avec la cathode de la deuxième diode Zener Z2. Une diode électroluminescente de l'optocoupleur OPTO est connectée en parallèle avec la résistance R4.

L'anode de la diode électroluminescente de l'optocoupleur OPTO est connectée électriquement entre les résistances R4 et R5. La cathode de la diode électroluminescente de l'optocoupleur est connectée électriquement à la cathode de la deuxième diode Zener Z2 dont l'anode est connectée à la masse électrique.

Lorsque l'interrupteur commandé T1 est fermé, les première et deuxième diodes Zener Z1, Z2 sont connectées en parallèle entre la cathode de la diode électroluminescente de l'optocoupleur et la masse GND. On suppose que la tension Zener de la première diode Z1 est inférieure à la tension Zener de la deuxième diode Z2. Dans ces conditions, la première diode Zener Z1 va drainer quasiment tout le courant et imposer sa tension Zener. La deuxième diode Zener Z2 est non fonctionnelle. La diode électroluminescente est parcourue par un courant dès que la tension de sortie du régulateur de tension dépasse la somme du seuil de conduction de la diode électroluminescente et de la tension Zener de la première diode Zener Z1. Cette configuration permet de placer le convertisseur dans un premier mode de fonctionnement dans lequel sa tension de sortie est commandée par la tension Zener de la première diode Z1. Comme énoncé précédemment, cette tension de sortie se retrouve sur la ligne VR utilisée pour commuter l'organe de commutation 20 dans une position ouverte. Lorsque l'interrupteur T1 est fermé, la tension sur la ligne VR est égale à la tension de mode de veille et l'organe de commutation est en position ouverte ne permettant pas d'alimenter le moteur 8. De façon avantageuse, cette coupure de l'alimentation du moteur permet de réduire la consommation de l'installation domotique en mode veille.

Lorsque l'interrupteur commandé T1 est ouvert, la diode électroluminescente est parcourue par un courant dès que la tension de sortie du convertisseur dépasse la somme du seuil de conduction de la diode électroluminescente et de la tension Zener de la deuxième diode Zener Z2. Le régulateur 40 est donc régulé par sa tension de sortie. Lorsque le régulateur 40 est un hacheur, son hachage est régulé par la tension de sortie du convertisseur de puissance. Cette configuration permet de placer le convertisseur dans un deuxième mode de fonctionnement dans lequel sa tension de sortie est conditionnée par la tension Zener de la deuxième diode Z2. Cette tension de sortie va transiter sur la ligne de commande VR et commuter l'organe de commutation 20 dans une position fermée. Lorsque l'interrupteur T1 est ouvert, la tension sur la ligne VR est égale à la tension de réveil et l'organe de commutation est en position fermée permettant d'alimenter le moteur 8 pendant un temps prédéterminé.

A titre d'exemple illustratif, la tension Zener de la diode Z1 est égale à 6,2 V et la tension Zener de la diode Z2 est égale à 11 V. Ces valeurs de tension sont choisies en fonction des valeurs de tensions requises pour piloter le découpage du régulateur 40.

Une sortie du circuit d'alimentation 12 est connectée au point commun PC précité pour fournir une tension de commande à la ligne de commande VR par rapport à la masse. Un condensateur C3 peut être connecté entre le point commun PC et la masse GND afin de lisser la tension de commande.

A titre d'exemple illustratif, la valeur de la tension électrique entre le point commun PC et la masse GND peut être choisie égale à 12 V ou à 7 V, selon le mode de fonctionnement dans lequel le régulateur 40 se trouve.

La sortie 402 du régulateur 40 est connectée électriquement d'une part à l'inductance L1 connectée en série avec un condensateur C3, et d'autre part à la cathode d'une diode de roue libre D2 dont l'anode est connectée à la masse électrique.

Un ou plusieurs condensateurs dits de sortie C4 sont connectés entre la masse électrique GND et la cathode d'une diode D3 dont l'anode est connectée électriquement au point commun PC. De façon préférentielle, pour des problèmes d'encombrement, un seul condensateur est employé. Par la suite, le terme singulier « condensateur de sortie » désignera un ou plusieurs condensateurs.

Suivant un mode de réalisation préférentiel, une résistance R6 est connectée électriquement entre la diode D3 et le condensateur de sortie C4 afin de limiter le courant entrant dans le condensateur et notamment les pics de courant lors de la mise sous tension. Le condensateur de sortie C4 forme une deuxième réserve d'énergie pour le circuit d'alimentation 12.

Un circuit de régulation est connecté électriquement à la cathode d'une diode D4 dont l'anode est connectée électriquement au point commun PC. Le circuit de régulation comprend un régulateur de tension 48 et des condensateurs de filtrage C5, C6, C7. L'entrée 481 du régulateur de tension 48 est connectée électriquement à la cathode de la diode D4 et à une première borne du condensateur C5 dont la deuxième borne est connectée électriquement à la masse électrique GND. Au moins un condensateur de filtrage C6, C7 est connecté électriquement entre la sortie 482 du régulateur de tension 48 et la masse électrique GND.

La ligne d'alimentation VOUT est connectée à la sortie 482 du régulateur de tension 48. Le régulateur de tension 48 est configuré pour fournir en sortie une tension continue régulée. Suivant un mode de réalisation, la tension de sortie est choisie, par exemple, égale à 3,3 V afin d'alimenter les circuits électroniques du dispositif domotique.

Une diode D5 est connectée électriquement entre le condensateur C4 et le régulateur de tension 48. La cathode de la diode D5 est connectée à l'entrée 481 du régulateur de tension et son anode à la borne du condensateur de sortie C4 non connectée à la masse électrique GND.

Selon des exemples illustratifs, le condensateur de sortie C4 a une capacité supérieure ou égale à 1mF, par exemple supérieure ou égale à 1,5mF. En variante, le nombre de condensateurs ainsi connectés en sortie du convertisseur 40 peut être différent, par exemple supérieur ou égal à deux.

Un exemple de fonctionnement du dispositif d'entraînement 6 motorisé en cas de coupure de l'alimentation électrique est maintenant décrit en référence à la figure 3.

Suivant un mode de réalisation, le circuit d'alimentation comprend un module de détection d'une coupure de l'alimentation. Le module de détection peut comprendre, par exemple, un comparateur de tension ou un superviseur d'alimentation.

En fonctionnement normal, le dispositif d'entraînement 6 est alimenté électriquement par la tension d'alimentation U₁ non nulle fournie par le réseau de distribution. L'actionneur 8 est dans un mode de fonctionnement de veille et l'écran 4 est immobile. L'interrupteur commandé T1 est fermé et les diodes Zener Z1, Z2 sont connectées en parallèle entre la masse électrique et la cathode de la diode électroluminescente de l'optocoupleur OPTO. La tension de sortie du régulateur 40 entre le point commun PC et la masse est donc égale à une première tension de veille. Le condensateur de sortie C4 est chargé de sorte que la valeur de la tension à ses bornes soit sensiblement égale à celle de la tension de veille.

Dans le cas d'un dysfonctionnement de l'alimentation secteur, l'alimentation électrique est interrompue, par exemple accidentellement, de sorte que la tension d'alimentation U₁ a une valeur constante nulle.

Lors d'une étape 100, le circuit électronique de commande et/ou de contrôle 18 détecte une coupure de l'alimentation électrique, par exemple grâce à un signal de mesure fourni par l'intermédiaire du circuit d'alimentation 12. Suivant une variante de mise en oeuvre, la détection est effectuée par la réception d'un signal électrique représentatif d'une coupure de l'alimentation en provenance d'un capteur dédié.

Le circuit électronique 18 acquiert le signal de sortie du capteur 26 de position et/ou de déplacement automatiquement, par exemple à une première fréquence F1. Lorsque le circuit électronique de commande et/ou de contrôle 18 détecte une coupure de l'alimentation, la valeur du signal représentatif de la position et/ou du déplacement de l'écran à l'instant de la coupure de l'alimentation est enregistrée, par exemple, dans la mémoire 30.

Lorsque le circuit électronique de commande et/ou de contrôle 18 détecte une coupure de l'alimentation, il déclenche également le décompte d'une durée, dite première durée, par exemple au moyen de l'horloge 32. La première durée peut avoir une valeur prédéfinie, par exemple programmée en usine ou définie par un utilisateur. La durée prédéfinie est, par exemple, choisie comme correspondant à la durée moyenne des interruptions accidentelles d'alimentation électrique typiquement constatées sur le réseau d'alimentation électrique. Alternativement, la durée prédéfinie correspond à la durée variable de déchargement du condensateur de sortie C4 jusqu'à une tension seuil prédéfinie.

En variante, la première durée est modulée automatiquement par le circuit électronique de commande 18 en fonction de la quantité d'énergie restant dans le condensateur de sortie C4, cette quantité pouvant être évaluée en mesurant la tension électrique présente aux bornes du condensateur de sortie C4. Par exemple, la valeur de la première durée est automatiquement recalculée au cours du temps par le circuit électronique de commande 18 en fonction des valeurs de tension aux bornes du condensateur de sortie C4 mesurées périodiquement.

Ainsi, lorsque la coupure d'alimentation électrique dure plus longtemps que la durée prédéfinie, le circuit électronique de commande 18 continue à surveiller ou mesurer un déplacement de la charge 4 tant qu'il reste suffisament d'énergie dans le condensateur C4.

Selon des modes de réalisation particulièrement avantageux, lors d'une étape 102 postérieure à la détection de perte d'alimentation, le circuit électronique de commande et/ou de contrôle 18 commande le transfert de l'énergie stockée dans les condensateurs d'entrée C1, C2 vers le condensateur de sortie C4.

Par exemple, pour commander le transfert d'énergie, le circuit électronique de commande et/ou de contrôle 18 modifie automatiquement le signal électrique appliqué sur l'entrée de commande 403, 404 du régulateur à découpage 40 depuis une première valeur vers une deuxième valeur.

Dans l'exemple illustré, suite à la détection de la coupure de l'alimentation, le circuit électronique de commande et/ou de contrôle 18 envoie un signal de commande PWR-D à destination d'une électrode de commande de l'interrupteur commandé T1 pour commuter l'interrupteur commandé T1 d'un mode fermé vers un mode ouvert. La diode Zener Z1 est ainsi déconnectée de la masse électrique et seule la diode Zener Z2 est connectée entre la diode de l'optocoupleur et la masse électrique GND. La valeur de la tension Zener de la diode Z1 étant supérieure à celle de la diode Z2, cela a pour conséquence d'augmenter la valeur du signal électrique appliqué sur l'entrée de commande 403, 404 du régulateur à découpage 40.

En réponse à ce changement, la valeur du rapport cyclique de découpage du régulateur 40 est modifiée et la valeur de la tension de sortie du régulateur, entre le point commun PC et la masse GND, augmente jusqu'à une deuxième valeur de tension de sortie égale à la tension de réveil. Les diodes D3 et D4 conduisent et le condensateur de sortie C4 se charge. Pendant la durée de la charge, le régulateur consomme un courant d'amplitude élevée, par exemple, un courant compris entre 20mA et 30mA. A titre illustratif, le temps de charge du condensateur est inférieur à 1s. De façon avantageuse, du fait de cette consommation de courant relativement élevée, le régulateur à découpage 40 fonctionne avec un rendement élevé, par exemple supérieur ou égal à 50%, supérieur à celui qu'il aurait en l'absence de chargement du condensateur de sortie C4.

Une fois que le condensateur de sortie C4 est chargé, il est possible, selon les circonstances, que les condensateurs d'entrée C1 et C2 contiennent encore suffisamment d'énergie pour alimenter électriquement le régulateur 40 pendant une courte durée, par exemple inférieure à quelques secondes. Dans ce cas de figure, les valeurs de la tension de sortie du régulateur 40 et de la tension aux bornes du condensateur de sortie C4, étant égales, les diodes D3 et D5 sont bloquées. La diode D4 conduit et la tension de sortie du régulateur 40 se retrouve sur la ligne VR1 et en entrée du régulateur de tension 48. De façon avantageuse, cela permet au régulateur de tension 48 de maintenir la valeur de sa tension de sortie constante pendant cette durée sans décharger le condensateur de sortie C4 et ainsi prolonger l'alimentation du régulateur 48.

Lorsque la charge du condensateur d'entrée, C1, C2 est épuisée, le régulateur à découpage ne fournit plus de tension en sortie. Les diodes D3 et D4 sont bloquées et la diode D5 conduit. L'énergie stockée dans le condensateur de sortie C4 permet d'alimenter la ligne VR1 ainsi que le régulateur de tension 48, avec une tension stable et de valeur supérieure à celle de régulation, au moins pendant la durée prédéfinie, celle-ci étant par exemple, de l'ordre de deux à cinq minutes. Les valeurs de capacité des condensateurs d'entrée C1, C2, indirectement, et du condensateur de sortie C4 permettent notamment de dimensionner ladite durée prédéfinie. Il en est de même de la tension seuil en-deçà de laquelle le condensateur C4 se décharge.

Suite à la détection de la coupure de l'alimentation (étape 100) et, le cas échéant, suite au transfert d'énergie (étape 102), le circuit électronique de commande 18 surveille (étape 104) la valeur du signal de sortie du capteur 26 pendant la durée prédéfinie afin de déterminer un éventuel déplacement de l'arbre de sortie de l'actionneur et notamment d'un élément entrainé par ce dernier, comme l'organe de couplage 10 ou l'écran 4.

Suivant un mode de mise en oeuvre préférentiel, lors de la surveillance le circuit électronique de commande et/ou de contrôle 18 acquiert, par intermittence, en sortie du capteur 26, un signal représentatif d'une valeur de position et/ou de déplacement pendant la durée prédéfinie, par exemple à une deuxième fréquence F2, pouvant être égale ou inférieure à la première fréquence F1. Les acquisitions peuvent être effectuées suivant des intervalles de temps réguliers. Par exemple, les acquisitions peuvent être cadencées par l'horloge 32. En variante, les acquisitions sont effectuées de façon irrégulière. Le circuit électronique de commande 18 peut ainsi détecter automatiquement, au moyen d'un capteur 26, si l'écran 4 s'est déplacée durant une durée prédéfinie après la coupure de l'alimentation électrique. Après chaque acquisition, la valeur de sortie du capteur 26 peut être enregistrée dans la mémoire 30.

Selon des modes de mise en oeuvre préférentiels, la durée prédéfinie est inférieure ou égale à cinq minutes, de préférence inférieure ou égale à deux minutes. La valeur de la durée prédéfinie est par exemple enregistrée en mémoire 30.

Suivant une variante de mise en oeuvre, lors de l'étape de surveillance, le circuit électronique de commande et/ou de contrôle 18 acquiert le signal de sortie du capteur 26 après un délai égal à la durée prédéterminée. La valeur du signal représentatif de la position et/ou du déplacement de l'écran est ensuite enregistrée, par exemple, dans la mémoire 30.

Le circuit électronique de commande 18 est ensuite éteint jusqu'à ce que l'alimentation électrique soit restaurée. Cette étape permet la gestion d'un arrêt propre du circuit électronique de commande.

Selon des modes de réalisation avantageux, la quantité d'énergie restant dans le condensateur de sortie C4 est évaluée périodiquement par le circuit électronique de commande 18, par exemple avec une fréquence de scrutation différente de la fréquence F2.

Par exemple, une étape d'extinction du circuit électronique de commande 18 est automatiquement mise en oeuvre lorsque la quantité d'énergie restant dans le condensateur de sortie C4 devient inférieure à un seuil prédéfini.

On comprend que, pendant l'étape 104, le circuit électronique 18 n'est pas alimenté directement depuis le réseau électrique (puisque l'alimentation est interrompue) mais est alimenté à partir d'au moins une réserve d'énergie C1, C2, C4.

En particulier, si l'étape 102 a été mise en oeuvre, le circuit électronique de commande 18 est alimenté électriquement pendant l'étape de surveillance 104 grâce à l'énergie contenue dans le condensateur de sortie C4. Dans l'exemple illustré, le condensateur de sortie C4 se décharge en alimentant le régulateur 48, qui continue alors à alimenter la ligne VOUT avec une tension continue (ici égale à 3,3 V), par exemple jusqu'à ce que le condensateur C4 soit déchargé ou jusqu'à ce que le circuit électronique de commande 18 se soit éteint suite à l'étape 104.

On comprend donc que les valeurs des composants du circuit d'alimentation 12, comme les condensateurs d'entrée et de sortie sont notamment choisies de manière à ce qu'au moins le circuit électronique de commande 18 et le capteur soient alimentés électriquement de manière à fonctionner au moins pendant la durée prédéfinie et notamment pendant toute la durée de mise en oeuvre de l'étape 104.

Durant l'étape 104, le circuit électronique 18, par exemple l'unité logique de traitement 28, surveille également la durée de la coupure de l'alimentation et vérifie si la durée de la coupure de l'alimentation est supérieure à la durée prédéfinie. Si la durée de la coupure est supérieure à la durée prédéfinie Le circuit électronique 18 enregistre cette information dans une mémoire 30. Le circuit 18 peut, par exemple, modifier la valeur d'une variable booléenne, représentative d'un éventuel dépassement de la durée prédéfinie, enregistrée dans la mémoire 30, d'une valeur faux vers une valeur vrai. En pratique, il n'est pas forcément nécessaire de mesurer la durée de la coupure et l'étape peut, à la place, être interrompue au bout de la première durée.

Suivant un mode de mise en oeuvre, lorsque la coupure de l'alimentation est détectée, le circuit électronique 18 démarre un compteur d'horloge et détecte l'instant où le compteur dépasse la durée prédéfinie. Suivant une variante de mise en oeuvre, la surveillance de la durée de la coupure de l'alimentation est effectuée à l'aide d'un décompteur initialisé à un temps égal à la durée prédéfinie et le circuit électronique 18 détecte le passage à zéro du décompteur.

Lorsque l'alimentation électrique est rétablie, le circuit d'alimentation 12 est à nouveau normalement alimenté par la tension d'alimentation U₁, le circuit électronique de commande 18 détermine (étape 106) automatiquement s'il est nécessaire de recaler la position de l'écran 4.

Par « recalage », on désigne ici un déplacement de l'écran 4 vers au moins une position de référence prédéfinie et la détection de ladite position de référence. Le déplacement et la détection sont commandés et/ou contrôlés par le circuit électronique de commande 18 et effectués au moyen de l'actionneur. La position de référence est, par exemple, une position extrême de l'écran comme une butée ou une fin de course, c'est-à-dire une position dans laquelle l'écran est entièrement enroulé ou une position dans laquelle l'écran est entièrement déroulé.

La détermination est effectuée lors d'une étape 106, pendant laquelle le circuit électronique de commande 18 compare la ou les valeurs de position et/ou de déplacement enregistrées lors de l'étape de surveillance avec celle d'une position initiale à l'instant de la coupure secteur.

La position initiale est définie comme étant la position occupée par l'écran 4 lorsque survient la perte d'alimentation électrique. La valeur de cette position a, par exemple, été enregistrée dans la mémoire 30 lors de l'étape 100.

En pratique, l'écran 4 est considéré comme s'étant déplacé si la ou les valeurs représentatives de position et/ou de déplacement enregistrées lors de l'étape de surveillance 104 sont différentes de la valeur représentative de la position initiale enregistrée lors de l'étape de détection 100.

En variante, lors de l'étape de détermination 106, le circuit électronique détermine si la durée de la coupure de l'alimentation est supérieure à la durée prédéfinie. Cette détermination peut être réalisée en comparant la valeur de la durée enregistrée à l'issue de l'étape de surveillance 104 avec la valeur de la durée prédéfinie. Suivant un mode de mise en oeuvre alternatif, le circuit électrique 18 acquiert la valeur de la variable booléenne représentative d'un éventuel dépassement de la durée prédéfinie.

Si, à l'issue de la comparaison effectuée lors de l'étape 106, l'écran 4 est considéré comme s'étant déplacé et/ou si la durée de coupure a été inférieure à la durée prédéfinie, alors un recalage est effectué (étape 112).

Si la durée de la période de coupure de l'alimentation électrique est supérieure à la durée prédéfinie alors un recalage est effectué (étape 112).

Sinon, l'écran 4 est maintenu dans sa position actuelle (étape 110), ou position courante, c'est-à-dire la position occupée par l'écran au lorsque l'alimentation électrique est rétablie. En d'autres termes, le recalage est inhibé.

Ainsi, lors d'une étape 112, le circuit électronique de commande 18 commande un déplacement de l'écran 4 vers au moins une première position de référence prédéfinie, ce déplacement étant réalisé au moyen de l'actionneur 8. Lorsque la première position prédéfinie est atteinte, le circuit électronique de commande et de contrôle acquiert, en sortie du capteur 26, le signal représentatif de la position de l'écran 4. La valeur acquise est ensuite enregistrée dans la mémoire 30.

Suivant un mode de mise en oeuvre un deuxième déplacement de l'écran vers une deuxième position prédéfinie est effectué lors du recalage. Lorsque la deuxième position prédéfinie est atteinte, le circuit électronique 18 acquiert le signal représentatif de la position de l'écran 4 et l'enregistre dans la mémoire 30.

Suivant une variante de mise en oeuvre, la valeur représentative de la deuxième position prédéfinie est déduite de la valeur de la première position prédéfinie à l'aide d'une formule enregistrée dans la mémoire 30.

Suivant un mode de mise en oeuvre, si à l'issue d'une coupure de l'alimentation électrique, une étape de recalage 112 est requise, elle est déclenchée automatiquement dès la fin de la coupure de l'alimentation électrique.

Suivant une variante de mise en oeuvre, l'étape de recalage 112 n'est pas effectuée dès que l'alimentation électrique est rétablie mais suite la réception d'un ordre de commande de l'actionneur par l'utilisateur. De façon avantageuse, le fait de différer l'étape de recalage permet d'éviter de surprendre l'utilisateur. Cela permet également d'éviter un déclenchement d'une étape de recalage en pleine nuit lorsque l'utilisateur dort.

Grâce à l'invention, la détection ou la mesure d'un éventuel déplacement de l'écran pendant une coupure de l'alimentation électrique permet au circuit électronique de commande et/ou de contrôle 18 de déterminer s'il est nécessaire ou non de recaler la position de l'écran 4 lorsque l'alimentation électrique est restaurée. Ainsi, il n'est pas nécessaire d'effectuer systématiquement un recalage de la position de l'écran 4 après chaque interruption de l'alimentation électrique, évitant ainsi une usure prématurée de l'installation 2, notamment une usure prématurée des bras d'un store de terrasse.

Par ailleurs, en transférant vers le condensateur de sortie C4 au moins une partie de l'énergie stockée dans les condensateurs d'entrée C1 et C2 lors d'une coupure de l'alimentation électrique, le dispositif d'entraînement 6 dispose de suffisamment d'énergie en réserve pour détecter un éventuel déplacement de l'écran pendant une durée prédéterminée après la coupure de l'alimentation.

Dans l'exemple illustré, sans ce transfert d'énergie, le circuit électronique de commande 18 ne pourrait être alimenté que pendant quelques secondes, en déchargeant les condensateurs d'entrée C1 et C2 pour alimenter le convertisseur 40 afin de maintenir la tension constante sur la ligne VOUT.

En effet, supposons que l'actionneur soit en mode veille lorsque la coupure de l'alimentation électrique a lieu et qu'aucun transfert de la charge du condensateur d'entrée C1, C2 vers le condensateur de sortie C4 n'est effectué après la détection de la coupure de l'alimentation. Dans ce cas de figure, la tension de veille est fournie par le régulateur à découpage 40 à partir de l'énergie stockée dans le condensateur d'entrée. Pour commander le régulateur à découpage, la boucle de régulation 42 consomme un courant de l'ordre de 1,5mA. En sortie du régulateur à découpage, les différents circuits électroniques de l'étage secondaire comme le régulateur de tension 48, le circuit électronique 18 et le capteur 26 consomment peu de courant. A titre illustratif, ces circuits consomment un courant de l'ordre de 100µA lorsque l'actionneur est en mode veille. De ce fait, le rendement du régulateur à découpage 40 pour alimenter l'étage secondaire 46 est très faible, par exemple, inférieur à 10%. Dans ces conditions, la charge du condensateur d'entrée C1, C2 est très vite consommée et l'alimentation du dispositif n'est possible que pendant un temps très court et très inférieur à la durée prédéfinie. La charge du condensateur d'entrée est, par exemple, épuisée au bout d'une durée comprise entre 5s et 6s. Cette méthode ne permet donc pas d'alimenter les circuits électroniques 18, 26, 48 précités pendant la durée prédéfinie égale, par exemple, à 2 minutes et conduit à un important gaspillage de l'énergie stockée dans le condensateur d'entrée.

De façon différente, le fait de transférer tout ou partie de la charge du condensateur d'entrée C1, C2 vers le condensateur de sortie C4 permet de n'alimenter la boucle de régulation que pendant le temps de la charge du condensateur de sortie. Le temps de charge étant court, par exemple, inférieur à 1s, cette forte consommation ne dure que peu de temps, par rapport à la durée prédéfinie, et décharge donc peu le condensateur d'entrée. De plus, la charge du condensateur de sortie C4 consomme un courant fort, par exemple, un courant d'une valeur comprise entre 30 mA et 40mA en sortie du régulateur 40. De façon avantageuse, la forte consommation de courant permet au régulateur à découpage de fonctionner avec un rendement fort, par exemple supérieur à 50%. Ainsi, du fait des faibles pertes, un maximum de la charge du condensateur d'entrée est transféré vers le condensateur de sortie. Dans certains modes de réalisation, suivant le dimensionnement des composants et notamment des condensateurs C1, C2, C4, le condensateur d'entrée peut ne pas être entièrement déchargé à l'issue du transfert.

Un tel procédé peut être implémenté de façon simple dans des dispositifs d'entraînement existants, sans imposer de modifications structurelles majeures de leur circuit d'alimentation électrique.

De surcroît, un tel procédé est compatible avec les exigences de gestion et d'économie d'énergie auxquels doivent satisfaire les dispositifs d'entraînement 6. En particulier, le circuit électronique 18 dispose d'une réserve d'énergie suffisante pour mettre en oeuvre les étapes de mesure et détection pendant la coupure d'alimentation même lorsque la coupure d'alimentation est survenue alors que le dispositif d'entraînement 6 étant dans un mode de veille ou un mode d'économie d'énergie.

De nombreux autres modes de réalisation sont possibles.

En particulier, les modes de mise en oeuvre décrits ci-dessus sont généralisables au cas d'un dispositif d'entraînement 6 pour une installation domotique 2 dans lequel l'écran 4 est remplacé par une charge mécanique déplaçable autre qu'un écran.

La présente invention a également pour objet un dispositif d'entrainement motorisé comprenant un circuit électronique de commande et de contrôle 18 tel que décrit précédemment. Le circuit électronique 18 comprend des moyens et notamment au moins une unité logique de traitement agencé pour mettre en oeuvre tout ou partie d'au moins une étape du procédé tel que décrit précédemment.

Les modes de réalisation et les variantes envisagés ci-dessus peuvent être combinés entre eux pour donner naissance à de nouveaux modes de réalisation.

## Revendications

1. Procédé de commande d'un dispositif d'entraînement motorisé (6) comportant un actionneur (8) couplé à une charge mécanique (4) déplaçable, le procédé étant **caractérisé en ce qu'**il comprend des étapes consistant à :
a) détecter (100), par un circuit électronique de commande (18) du dispositif d'entraînement motorisé, une perte d'alimentation électrique du dispositif d'entraînement motorisé (6), l'actionneur (8) étant dans un mode de fonctionnement de veille et la charge mécanique (4) étant immobile ;
b) postérieurement à la détection de perte d'alimentation, transférer (102) au moins une partie de l'énergie stockée dans au moins un premier condensateur de filtrage (C1, C2) raccordé en entrée d'un régulateur de tension (40) du dispositif d'entraînement motorisé (6), vers un deuxième condensateur (C4) raccordé en sortie du régulateur de tension, l'entrée du régulateur de tension étant connectée à des connecteurs d'alimentation électrique (14, 16) du dispositif d'entraînement motorisé (6);
c) déterminer (104, 106), par le circuit électronique de commande (18), durant une première durée suivant la perte d'alimentation électrique, si la charge mécanique (4) s'est déplacée, le circuit électronique de commande (18) étant alimenté électriquement par le deuxième condensateur (C4) pendant cette étape de détermination ;
d) lorsque l'alimentation électrique du dispositif d'entraînement motorisé (6) est rétablie, commander (112) le déplacement de la charge mécanique, par le circuit électronique de commande et au moyen de l'actionneur, vers une position de référence prédéfinie si un déplacement de la charge mécanique a été déterminé lors de l'étape c), ou sinon, maintenir (110) la charge mécanique dans sa position actuelle si aucun déplacement n'a été déterminé lors de l'étape c).

2. Procédé selon la revendication 1, **caractérisé en ce que** le procédé comporte en outre la mesure (108), par le circuit électronique de commande (18), de la durée d'interruption de l'alimentation électrique, et **en ce que**, lors de l'étape d), la charge mécanique est déplacée (112) vers une position de référence prédéfinie si la durée d'interruption est supérieure ou égale à une valeur maximale prédéfinie même si aucun déplacement n'a été détecté lors de l'étape c).

3. Procédé selon la revendication 2, **caractérisé en ce que** la première durée est égale à la valeur maximale prédéfinie.

4. Procédé selon l'une quelconque des revendications précédentes, **caractérisé en ce que** le transfert d'énergie (102) comporte, par le circuit électronique de commande (18), la modification de la tension électrique appliquée sur une entrée de commande (42) du régulateur de tension (40) depuis une première valeur vers une deuxième valeur.

5. Procédé selon l'une quelconque des revendications précédentes, **caractérisé en ce que** la première durée a une valeur prédéfinie.

6. Procédé selon l'une quelconque des revendications 1 à 4, **caractérisé en ce que** la première durée est modulée automatiquement par le circuit électronique de commande (18) en fonction de la quantité d'énergie restant dans le deuxième condensateur (C4).

7. Procédé selon l'une quelconque des revendications précédentes, dans lequel la quantité d'énergie restant dans le deuxième condensateur (C4) est évaluée périodiquement par le circuit électronique de commande (18).

8. Procédé selon l'une quelconque des revendications précédentes, lequel comporte en outre l'extinction du circuit électronique de commande (18) lorsque la quantité d'énergie restant dans le deuxième condensateur (C4) devient inférieure à un seuil prédéfini.

9. Dispositif d'entraînement motorisé (6), comportant un actionneur (8) adapté pour être couplé à une charge mécanique (4) déplaçable, un circuit électronique de commande (18) adapté pour piloter l'actionneur, des connecteurs d'alimentation électrique (14, 16), un régulateur de tension (40) dont l'entrée est raccordée aux connecteurs d'alimentation électrique, au moins un premier condensateur (C1, C2) de filtrage raccordé en entrée du régulateur de tension, un deuxième condensateur (C4) raccordé en sortie du régulateur de tension, **caractérisé en ce que** le circuit électronique de commande (18) est programmé pour :
a) détecter (100) une perte d'alimentation électrique du dispositif d'entraînement motorisé (6), l'actionneur (8) étant dans un mode de fonctionnement de veille et la charge mécanique (4) étant immobile ;
b) postérieurement à la détection de perte d'alimentation, transférer (102) au moins une partie de l'énergie stockée dans le au moins un premier condensateur (C1, C2) vers le deuxième condensateur (C4);
c) déterminer (104, 106) durant une première durée suivant la perte d'alimentation électrique si la charge mécanique s'est déplacée, le circuit électronique de commande (18) étant alimenté électriquement par le deuxième condensateur (C4) pendant cette étape de détermination ;
d) lorsque l'alimentation électrique du dispositif d'entraînement motorisé (6) est rétablie, commander (112) le déplacement de la charge mécanique (4), au moyen de l'actionneur (8), vers une position de référence prédéfinie si un déplacement de la charge mécanique a été déterminé lors de l'étape c), ou sinon, maintenir (110) la charge mécanique dans sa position actuelle si aucun déplacement n'a été déterminé lors de l'étape c).

10. Installation domotique (2) **caractérisée en ce qu'**elle comporte une charge mécanique telle qu'un écran (4) déplaçable entre une position d'ouverture et une position de fermeture et un dispositif d'entraînement (6) motorisé selon la revendication 9, l'actionneur (8) du dispositif d'entraînement motorisé étant couplé à l'écran (4) pour déplacer la charge mécanique entre la position d'ouverture et la position de fermeture.

## Patentansprüche

1. Verfahren zum Steuern einer motorisierten Antriebsvorrichtung (6), umfassend einen Aktuator (8), der mit einer bewegbaren mechanischen Last (4) gekoppelt ist, wobei das Verfahren **dadurch gekennzeichnet ist, dass** es Schritte umfasst, die aus Folgendem bestehen:
a) Erfassen (100), durch eine Steuerelektronik (18) der motorisierten Antriebsvorrichtung, eines Ausfalls der Stromversorgung der motorisierten Antriebsvorrichtung (6),
wobei sich der Aktuator (8) in einem Standby-Betriebsmodus ist und die mechanische Last (4) unbewegbar ist;
b) nach Erfassen des Stromausfalls, Übertragen (102) mindestens eines Teils der gespeicherten Energie in mindestens einen ersten Filterkondensator (C1, C2), der mit dem Eingang eines Spannungsreglers (40) der motorisierten Antriebsvorrichtung (6) verbunden ist,
zu einem zweiten Kondensator (C4), der mit dem Ausgang des Spannungsreglers verbunden ist, wobei der Eingang des Spannungsreglers mit Stromversorgungsanschlüssen (14, 16) der motorisierten Antriebsvorrichtung (6) verbunden ist;
c) Bestimmen (104, 106) durch die Steuerelektronik (18) während einer ersten Zeitdauer nach dem Ausfall der Stromversorgung, ob sich die mechanische Last (4) bewegt hat, wobei die Steuerelektronik (18) während dieses Bestimmungsschritts von dem zweiten Kondensator (C4) elektrisch versorgt wird;
d) wenn die Stromversorgung des motorisierten Antriebs (6) wiederhergestellt ist,
Steuern (112) der Bewegung der mechanischen Last durch die Steuerelektronik und mittels des Aktuators in eine vordefinierte Referenzposition, wenn in Schritt c) eine Bewegung der mechanischen Last bestimmt wurde, oder andernfalls Halten (110) der mechanischen Last in ihrer aktuellen Position, wenn in Schritt c) keine Bewegung bestimmt wurde.

2. Verfahren nach Anspruch 1, **dadurch gekennzeichnet, dass** das Verfahren ferner das Messen (108) der Unterbrechungsdauer der Stromversorgung durch die Steuerelektronik (18) umfasst, und dass in Schritt d) die mechanische Last in eine in eine vordefinierte Referenzposition bewegt wird (112), wenn die Unterbrechungsdauer größer als oder gleich wie ein vordefinierter Maximalwert ist, selbst wenn in Schritt c) keine Bewegung erfasst wurde.

3. Verfahren nach Anspruch 2, **dadurch gekennzeichnet, dass** die erste Dauer gleich wie der vordefinierte Maximalwert ist.

4. Verfahren nach einem der vorherigen Ansprüche, **dadurch gekennzeichnet, dass** die Energieübertragung (102) durch die elektronische Steuerschaltung (18) die Änderung der an einen Steuereingang (42) des Spannungsreglers (40) angelegten elektrischen Spannung von einem ersten Wert auf einen zweiten Wert umfasst.

5. Verfahren nach einem der vorherigen Ansprüche, **dadurch gekennzeichnet, dass** die erste Dauer einen vordefinierten Wert aufweist.

6. Verfahren nach einem der Ansprüche 1 bis 4, **dadurch gekennzeichnet, dass** die erste Dauer abhängig von der in dem zweiten Kondensator (C4) verbleibenden Energiemenge automatisch von der Steuerelektronik (18) moduliert wird.

7. Verfahren nach einem der vorherigen Ansprüche, wobei die in dem zweiten Kondensator (C4) verbleibende Energiemenge periodisch von der Steuerelektronik (18) bewertet wird.

8. Verfahren nach einem der vorherigen Ansprüche, das ferner das Abschalten der Steuerelektronik (18) umfasst, wenn die in dem zweiten Kondensator (C4) verbleibende Energiemenge unter einen vordefinierten Schwellenwert fällt.

9. Motorisierte Antriebsvorrichtung (6), umfassend einen Aktuator (8), der angepasst ist, um mit einer beweglichen mechanischen Last (4) gekoppelt zu werden, eine Steuerelektronik (18), die angepasst ist, um den Aktuator anzusteuern, Stromversorgungsverbinder (14, 16), einen Spannungsregler (40), dessen Eingang mit den Stromversorgungsanschlüssen verbunden ist, mindestens einen ersten Filterkondensator (C1, C2), der mit dem Eingang des Spannungsreglers verbunden ist, einen zweiten Kondensator (C4), der mit dem Ausgang des Spannungsreglers verbunden ist, **dadurch gekennzeichnet, dass** die Steuerelektronik (18) zu Folgendem programmiert ist:
a) Erfassen (100) eines Stromausfalls der motorisierten Antriebsvorrichtung (6),
wobei sich der Aktuator (8) in einem Standby-Betriebsmodus ist und die mechanische Last (4) unbewegbar ist;
b) nach dem Erfassen des Stromausfalls, Übertragen (102) mindestens eines Teils der in dem mindestens einen ersten Kondensator (C1, C2) gespeicherten Energie auf den zweiten Kondensator (C4);
c) Bestimmen (104, 106) während einer ersten Zeitdauer nach dem Ausfall der Stromversorgung, ob sich die mechanische Last bewegt hat, wobei die Steuerelektronik (18) während dieses Bestimmungsschritts von dem zweiten Kondensator (C4) elektrisch versorgt wird;
d) wenn die Stromversorgung des motorisierten Antriebs (6) wiederhergestellt ist,
Steuern (112) der Bewegung der mechanischen Last (4) mittels des Aktuators (8) in eine vordefinierte Referenzposition, wenn in Schritt c) eine Bewegung der mechanischen Last bestimmt wurde, oder andernfalls Halten (110) der mechanischen Last in ihrer aktuellen Position, wenn in Schritt c) keine Bewegung bestimmt wurde.

10. Hausautomationsanlage (2), **dadurch gekennzeichnet, dass** sie eine mechanische Last, wie beispielsweise eine Abschirmung (4), die zwischen einer Öffnungsposition und einer Schließposition bewegbar ist, und eine motorisierte Antriebsvorrichtung (6) nach Anspruch 9 umfasst, wobei der Aktuator (8) der motorisierten Antriebsvorrichtung mit der Abschirmung (4) gekoppelt ist, um die mechanische Last zwischen der Öffnungsposition und der Schließposition zu bewegen.

## Claims

1. A method for controlling a motorised drive device (6) including an actuator (8) coupled to a movable mechanical load (4), the method being **characterised in that** it comprises steps of:
a) detecting (100) a loss of electrical power to the motorised drive device, by an electronic control circuit (18) of the motorised drive device (6), the actuator (8) being in a standby mode and the mechanical load (4) being stationary;
b) subsequent to detecting a loss of power, transferring (102) at least a portion of the energy stored in at least a first filter capacitor (C1, C2) connected to the input of a voltage regulator (40) of the motorised drive device (6), to a second capacitor (C4) connected to the output of the voltage regulator, the input of the voltage regulator being connected to electrical power connectors (14, 16) of the motorised drive device (6);
c) determining (104, 106), by the electronic control circuit (18), during a first time period following the loss of power, whether the mechanical load (4) has moved, the electronic control circuit (18) being powered by the second capacitor (C4) during this determining step;
d) when power to the motorised drive device (6) is restored, controlling (112) the movement of the load, by the electronic control circuit and by means of the actuator, into a predefined reference position if mechanical load movement has been determined in step c), or otherwise, keeping (110) the mechanical load in its current position if no movement has been determined in step c).

2. The method according to claim 1, **characterised in that** the method further comprises the electronic control circuit (18) measuring (108) the time period of electrical power interruption, and **in that**, in step d), the mechanical load is moved (112) into a predefined reference position if the interruption time period is greater than or equal to a predefined maximum value even if no movement was detected in step c).

3. The method according to claim 2, **characterised in that** the first time period is equal to the predefined maximum value.

4. The method according to any one of the preceding claims, **characterised in that** the energy transfer (102) includes modification of the electrical voltage applied to a control input (42) of the voltage regulator (40) by the electronic control circuit (18) from a first value to a second value.

5. The method according to any one of the preceding claims, **characterised in that** the first time period has a predefined value.

6. The method according to any one of claims 1 to 4, **characterised in that** the first time period is modulated automatically by the electronic control circuit (18) depending on the amount of energy remaining in the second capacitor (C4).

7. The method according to any one of the preceding claims, wherein the amount of energy remaining in the second capacitor (C4) is periodically evaluated by the electronic control circuit (18).

8. The method according to any one of the preceding claims, which further includes turning off the electronic control circuit (18) when the amount of energy remaining in the second capacitor (C4) becomes less than a predefined threshold.

9. A motorised drive device (6), comprising an actuator (8) adapted to be coupled to a movable mechanical load (4), an electronic control circuit (18) adapted to drive the actuator, electrical power connectors (14, 16) a voltage regulator (40) whose input is connected to the electrical power connectors, at least a first filter capacitor (C1, C2) connected to the input of the voltage regulator, a second capacitor (C4) connected to the output of the voltage regulator, **characterised in that** the electronic control circuit (18) is programmed to:
a) detect (100) a loss of electrical power to the motorised drive device (6), the actuator (8) being in a standby mode and the mechanical load (4) being stationary;
b) subsequent to the detection of loss of electrical power, transfer (102) at least a portion of the energy stored in the at least one first capacitor (C1, C2) to the second capacitor (C4)
c) determine (104, 106) during a first time period following the loss of electrical power whether the mechanical load has moved, the electronic control circuit (18) being powered by the second capacitor (C4) during this determining step;
d) when the electrical power to the motorised drive device (6) is restored, control (112) the mechanical load movement (4), by means of the actuator (8), towards a predefined reference position if a mechanical load movement has been determined in step c), or otherwise, keep (110) the mechanical load in its current position if no movement has been determined in step c).

10. A home automation installation (2) **characterised in that** it includes a mechanical load such as a screen (4) movable between an open position and a closed position and a motorised drive device (6) according to claim 9, the actuator (8) of the motorised drive device being coupled to the screen (4) to move the mechanical load between the open position and the closed position.
